# EUROPEAN PATENT SPECIFICATION

(11) **EP 2 914 674 B1**
(45) Date of publication and mention of the grant of the patent: **17.02.2016**
(21) Application number: 13777034.3
(22) Date of filing: 14.10.2013
(51) Int. Cl.: C09D 183/02, C08G 77/02, C09D 183/04

(54) **HYDROPHOBIC COATING**
WASSERABWEISENDE BESCHICHTUNG
REVÊTEMENT HYDROPHILE

(30) Priority: 31.10.2012 WO PCT/CN2012/083848; 05.12.2012 EP 12195652
(43) Date of publication of application: 09.09.2015
(73) Proprietor: Unilever N.V., 3013 AL Rotterdam (NL); Unilever PLC, London, Greater London EC4Y 0DY (GB)
(72) Inventor: LI, Jinyong, Shanghai 200335 (CN); TAO, Qingsheng, 200335 (CN)
(74) Representative: Corsten, Michael Allan
(86) International application number: PCT/EP2013/071398
(87) International publication number: WO 2014/067769

(56) References cited:
- US-A1- 2009 087 665
- US-B1- 6 210 750

## Description

### FIELD OF THE INVENTION

The present invention relates to manufacture of a composition for applying to surfaces to create a hydrophobic coating thereon. In particular, the present invention relates to such a composition which comprises hydrolyzed silanes.

### BACKGROUND OF THE INVENTION

Droughts, poor irrigation and insufficient plumbing systems are just some of the reasons that cause water shortages in certain regions. Shortages of water can create serious social problems, such as health issues, that are a direct result of inadequate cleaning applications in the absence of sufficient amounts of water.

Efforts for cleaning surfaces with limited amounts of water have been made. In fact, the cleaning of surfaces that attempt to mimic the surface of a lotus leaf has been investigated. Taro leaves, for example, have been used as templates for polystyrene structures that can display a lotus leaf effect. Such structures can be used for coatings that possess superhydrophobic properties. Articles with surfaces that are difficult to wet, i.e., articles with hydrophobic surfaces, are therefore desirable since they possess self-cleaning properties when water is present at low volumes. Moreover, such coatings, subsequent to being applied, yield surfaces that make cleaning easier and faster for the consumer.

While hydrophobic, and especially superhydrophobic surfaces are desirable, compositions that result in such surfaces can be difficult to manufacture and can result in surfaces that display inferior self cleaning, a direct result, for example, of their characteristic contact angles that are too low and/or their characteristic sliding angles are too high. Moreover, reliable methods for generating superhydrophobic coatings that do not alter the look of treated surfaces are not a given.

There is an increasing interest to develop hydrophobic coatings that result in surfaces displaying high contact angles and/or low sliding angles against water.

US 6,210,750 (SAMSUNG CORNING CO LTD) discloses a water-repellent glass prepared by a process which comprises: (a) preparing a colloidal silica suspension by hydrolyzing and polycondensing an alkoxysilane in an organic solvent under a basic condition in the presence of water, and then treating the colloidal silica suspension under an acidic condition, to obtain a silica dispersion containing cross-linked spherical silica particles and linear polysiloxane, (b) combining the silica dispersion with a mixed solvent composed of acetic acid and an alcohol to obtain a coating composition, (c) applying the coating composition on the surface of a glass substrate to form a silica layer therefrom, (d) heat treating the silica layer to provide a silica film on the glass substrate, and (e) applying a water-repellent agent on the silica film to provide the water-repellent glass.

In the above publication, after coating with a silica film additional steps of application of heat and a surface modification treatment (e.g. by surface condensation of fluorocarbons) is taught in order to achieve the desired water repellency.

US 2009/0087665 discloses a two-part mixed sol used as coating to provide a hydrophobic film.

The present inventors have recognized that there is a need to generate coatings that do not alter the look of surfaces they are applied on. In addition the present inventors have recognized a need for compositions for generating such a coating and that can be formulated from readily-available and/or safe materials such that the compositions may be used by consumers in-home.

### TESTS AND DEFINITIONS

### Hydrophobicity

"hydrophobic" for the purposes of the present invention is used to describe a molecule or portion of a molecule that is attracted to, and tends to be dissolved by oil (in preference to water), or a surface that has a contact angle against water of greater than 90° and/or a sliding angle of less than 45°. "Ultrahydrophobic" as used herein means having a contact angle of greater than 110° against water and a sliding angle of less than 45°. "Superhydrophobic" as used herein means having a contact angle of at least 140° against water and a sliding angle of less than 20°. Contact angle, as used herein, means the angle at which a water/vapor interface meets a solid surface at a temperature of 25 °C. Such an angle may be measured with a goniometer or other water droplet shape analysis systems. Sliding angle, as used herein, means the tilt angle of a surface at which a 10 µl droplet of water slides at 25 °C.

### Oligomer

"Oligomer" for the purposes of the present invention means a molecule that consists of several monomer units, for example, from 2 to 100, more preferably, from 2 to 60 monomer units.

### Hydrolyses

"Hydrolysis" for the purposes of the present invention refers to a reaction with water. "Hydrolyzable" herein means the compound may react with water. "Hydrolyzed" means the compound is the reaction product of another compound (a precursor) with water. The degree of hydrolysis of hydrolysable silanes can conveniently be determined using spectroscopy such as Fourier-transform infra red (FTIR) and/or nuclear magnetic resonance (NMR) spectroscopies (see, for example A. Beganskiene et al., "FTIR, TEM and NMR Investigations of Stöber Silica Nanoparticles", Materials Science (MEDŽIAGOTYRA), 2004, 10, pp. 287-290; or D.L. Green et al., "Chemical reaction kinetics leading to the first Stober silica nanoparticles - NMR and SAXS investigation", Journal of Non-Crystalline Solids, 2003, 315, pp. 166-179).

### pH

pH values referred to herein are measured at a temperature of 25 °C.

### Transmittance

Values of transmittance quoted herein are determined at a wavelength of 550 nm and are measured as follows:
- An uncoated glass slide having a transmittance of 89.0% is taken as substrate.
- Composition is spread on to one side of the slide to give an even coating of about 2.86 x 10⁻⁴ mg/mm².
- The coating is cured for 10 minutes or until it forms a cohesive film.
- The coated slide is placed in a UV-vis spectrometer (e.g. Perkin-Elmer Lambda 650S) and the transmittance measured at 25 °C.

Transmittance is used herein as a measure of transparency and so should be determined in the absence of any chromophores with appreciable absorbance at 550 nm.

### Haze

Haze is measured in a similar manner to transmittance except that a colourimeter such as UltmScan^{™} PRO (from HunterLab) is used with D65 illumination operating in Total transmittance mode.

### Refractive Index

Refractive index is quoted at a temperature of 25 °C and a wavelength of 589 nm.

### Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the total composition, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

### SUMMARY OF THE INVENTION

In a first aspect, the present invention provides a process for manufacturing a coating composition, wherein the process comprises the steps of:
(i) forming a reaction mixture comprising water, first quaternary silane and second quaternary silane, wherein the first quaternary silane has formula (I),

   Si(R¹)₄ (I)

   wherein each R¹ is independently selected from alkoxy and halogen; and
   the second quaternary silane has formula (II),

   (R¹)₄₋ₘSi(R²)ₘ (II)

   wherein each R¹ is independently selected from alkoxy and halogen;
   R² comprises at least 2 carbon atoms and is selected from alkyl, alkenyl, fluoroalkyl, fluoroalkenyl, aryl, fluoroaryl and combinations thereof; and
   m is an integer from 1 to 3, preferably 1 or 2;
(ii) hydrolyzing the reaction mixture under basic conditions; and then
(iii) continuing the hydrolysis under acidic conditions.

In a second aspect, the present invention provides a coating composition obtainable by the process of any embodiment of the first aspect.

In a third aspect, the present invention provides a method for forming a hydrophobic coating on a surface, the method comprising applying the composition of any embodiment of the second aspect to the surface and drying the composition to yield the hydrophobic coating.

In a fourth aspect, the present invention provides a method for treating a hard surface comprising:
I. forming a hydrophobic coating on the surface by the method of any embodiment of the third aspect;
II. allowing soil and/or stains to deposit on the coating; and then
III. cleaning the surface to remove the soil and/or stains.

In a fifth aspect, the present invention provides a hydrophobic coating obtained and/or obtainable by the method of any embodiment of the third aspect.

All other aspects of the present invention will more readily become apparent upon considering the detailed description and examples which follow.

### DETAILED DESCRIPTION

The first quaternary silane employed in this invention is a silane wherein all four ligands are hydrolysable to hydroxyl ligands. Thus, the first quaternary silane has formula (I):

(R¹)₄Si (I),

wherein R¹ represents a ligand which can be hydrolyzed to a hydroxyl group. R¹ is thus selected from alkoxy, halogen, or the like.

Examples of first quaternary silane employed in this invention include those which comprise tetraethoxysilane (also called tetraethyl orthosilicate or TEOS), tetramethoxysilane (also called tetramethyl orthosilicate or TMOS), tetrapropoxysilane (also called tetrapropyl orthosilicate or TPOS), tetrabutoxysilane (also called tetrabutyl orthosilicate or TBOS), tetrabiomosilane, tetrachlorosilane or a mixture thereof. In a more preferred embodiment, the first quaternary silane comprises TEOS, TBOS or a mixture thereof.

For example, the first quaternary silane suitable for use in this invention includes TEOS from Shanghai Chemical Reagent Co. Ltd (China) and/or TBOS from Sigma-Aldrich (Germany).

The second quaternary silane used in this invention is a silane having at least one ligand which is hydrolysable to hydroxyl and at least one hydrophobic ligand. Thus the second quaternary silane has formula (II):

(R¹)₄₋ₘSi(R²)ₘ (II),

wherein:
- each R¹ is independently selected from alkoxy and halogen;
- R² comprises at least 2 carbon atoms and is selected from alkyl, alkenyl, fluoroalkyl, fluoroalkenyl, aryl, fluoroaryl and combinations thereof; and
- m = 1 to 3.

To provide for maximum hydrophobicity, it is preferred that R² comprises at least 3 carbon atoms, more preferably at least 4 carbon atoms, more preferably still at least 5 carbon atoms, even more preferably at least 6 carbon atoms and most preferably at least 7 carbon atoms. Longer carbon chains may, however negatively affect the stability of the silane and/or may impair its ability to react with the first quaternary silane during hydrolysis. Thus it is preferred that R² comprises less than 30 carbon atoms, more preferably less than 25, more preferably still less than 20 and most preferably less than 18. For similar reasons it is additionally or alternatively preferred that only one or two of the ligands on the second quaternary silane is hydrophobic, i.e., m = 1 or 2, most preferably m =1.

In a most preferred embodiment R² is alkyl, especially C₅-C₂₀ alkyl.

Examples of second quaternary silane employed in this invention include those which comprise phenyltrimethoxysilane, phenyltriethoxysilane, phenyltrichlorosilane, benzyltrimethoxysilane, benzyltriethoxysilane, benzyltrichlorosilane, phenethyltrimethoxysilane, phenethyltriethoxysilane, phenethyltrichlorosilane, butyltrimethoxysilane, butyltriethoxysilane, butyltrichlorosilane, cyclohexyltrimethoxysilane, cyclohexyltriethoxysilane, cyclohexyltrichlorosilane, hexadecyltrimethoxysilane, hexadecyltriethoxysilane, hexadecyltrichlorosilane, (tridecafluoro-1,1,2,2-tetrahydro-octyl)trimethoxysilane, (tridecafluoro-1,1,2,2-tetrahydro-octyl)triethoxysilane, (tridecafluoro-1,1,2,2-tetrahydro-octyl)trichlorosilane, pentyltrimethoxysilane, pentyltriethoxysilane, riichloropentylsilane, hexyltrimethoxysilane, hexyltriethoxysilane, trichlorohexylsilane, heptyltrimethoxysilane, heptyltriethoxysilane, trichloroheptylsilane, octyltrimethoxysilane, octyltriethoxysilane, trichlorooctylsilane, decyltrimethoxysilane, decyltriethoxysilane, trichlorodecylsilane, dodecyltrimethoxysilane, dodecyltriethoxysilane, trichlorododecylsilane, octadecyltrimethoxysilane, octadecyltriethoxysilane, trichlorooctadecylsilane, or a mixture thereof.

More preferably, the second quaternary silane is selected from pentyltrimethoxysilane, pentyltriethoxysilane, trichloropentylsilane, hexyltrimethoxysilane, hexyltriethoxysilane, trichlorohexylsilane, heptyltrimethoxysilane, heptyltriethoxysilane, trichloroheptylsilane, octyltrimethoxysilane, octyltriethoxysilane, trichlorooctylsilane, decyltrimethoxysilane, decyltriethoxysilane, trichlorodecylsilane, dodecyltrimethoxysilane, dodecyltriethoxysilane, trichlorododecylsilane, hexadecyltrimethoxysilane, hexadecyltriethoxysilane, hexadecyltrichlorosilane, octadecyltrimethoxysilane, octadecyltriethoxysilane, trichlorooctadecylsilane, or a mixture thereof.

For example, the second quaternary silane suitable for use in this invention includes hexyltrimethoxysilane, dodecyltrimethoxysilane, trichlorododecylsilane, and/or octadecyltriethoxysilane, all of which are commercially available from Tokyo Chemical Industry Co., Ltd (Japan).

In the process of the present invention, the first and second quaternary silanes are included in a reaction mixture. The present inventors have found that inclusion of the first quaternary silane in compositions of the invention can provide coatings with excellent robustness, for example in terms of scratch and/or rub resistance. The first quaternary silane is, however, relatively hydrophilic and so the present inventors have found it beneficial to incorporate the second quaternary silane which is relatively more hydrophobic owing to presence of the hydrophobic ligand(s). Furthermore, the second quaternary silane may increase the toughness of the final coating. Without wishing to be bound by theory the present inventors believe that the hydrophobic groups in the second quaternary silane help to reduce the density of the final coating which in turn reduces brittleness and increases toughness.

Surprisingly, despite the relative hydrophilicity of the first quaternary silane, the present inventors have found that even large proportions of the first quaternary silane can be used in the reaction mixture without impairing its ability to yield a composition suitable for forming a hydrophobic coating. For example, the weight ratio of the first quaternary silane to the second quaternary silane in the reaction mixture may be at least 1:1, more preferably at least 2:1, more preferably still at least 3:1 and most preferably at least 4:1. To maximise hydrophobicity of the final coating, however, it is preferred that the weight ratio of the first quaternary silane to the second quaternary silane in the reaction mixture is no greater than 100:1, more preferably no greater than 50:1, more preferably still no greater than 30:1 and most preferably no greater than 20:1.

The present inventors have also found that relatively low total amounts of silane are required to provide compositions which are capable of yielding coatings which are both hydrophobic and robust. Moreover, excessive amounts of silane in the reaction mixture may accelerate the reaction kinetics such that it is difficult to ensure that at least some of the hydrolysis occurs in the acidic step (iii) which is subsequent to the basic step (ii). Thus it is preferred that the reaction mixture comprises the first quaternary silane and the second quaternary silane in a total amount of no more than 20% by weight of the mixture, more preferably no more than 15%, more preferably still no more than 12%, even more preferably no more than 10%, even more preferably still no more than 9% and most preferably no more than 7%. The minimum amount of total silane (the amount of first quaternary silane plus the amount of second quaternary silane) is preferably at least 0.1% by weight of the reaction mixture, more preferably at least 0.5%, more preferably still at least 1% and most preferably at least 2%.

The reaction mixture also comprises water. The amount of water needed for hydrolysis is not large and in fact too much water may unwantedly accelerate the reaction kinetics during the basic hydrolysis step (ii). Typically, for example, the reaction mixture comprises water in an amount of 20% or less by weight of the mixture, more preferably less than 10%, more preferably still less than 7% and most preferably less than 5%. Typically, the mixture comprises at least 0.1% water by weight of the reaction mixture, more preferably at least 0.5%, more preferably still at least 1% and most preferably at least 2%.

When forming a reaction mixture comprising water and the quaternary silanes, there is no limitation in respect to the sequence of mixing water and quaternary silanes. Either water is added into quaternary silanes, or quaternary silanes are added into water. Generally, stirring is used for making water and quaternary silane well mixed.

In addition to the quaternary silanes and water, the reaction mixture may comprise other substances. In particular the reaction mixture may comprise non-aqueous solvent. Often non-aqueous solvent will make up the balance of the reaction mixture but optional ingredients such as colourants, preservatives and the like may also be present in the mixture. The mixture may comprise the non-aqueous solvent in an amount, for example, of from 50 to 99.9% by weight, more preferably from 70 to 99%, more preferably still from 80 to 97% by weight, and most preferably from 82 to 92% by weight.

Preferred non-aqueous solvents are volatile solvents (i.e. solvents which have a measurable vapour pressure at 25 °C). More preferred are solvents which have a vapour pressure at least equal to that of pure water at 25 °C. Volatile solvents are preferred because of their tendency to evaporate quickly and so leave behind a coating consisting of (or at least consisting essentially of) first hydrolyzed silane and second hydrolyzed silane.

Occasionally, some solvent may remain in the coating and so to prevent unwanted opacity on such occasions, it is preferred to employ a non-aqueous solvent which has a refractive index close to that of the silanes. Thus it is preferred that the non-aqueous solvent (when employed) has a refractive index in the range 1.2 to 1.6, more preferably 1.3 to 1.5.

Particularly preferred non-aqueous solvents, owing to their relative safety and high volatility, are polar organic solvent, more preferably C₁-C₄ alcohol. Most preferably the non-aqueous solvent comprises methanol, ethanol, propanol, isopropanol or a mixture thereof.

Step (ii) of the process comprises hydrolyzing the reaction mixture under basic conditions. During this step a portion of the first and second quaternary silanes undergoes condensation polymerization to form oligomers and polysiloxane. Owing to the basic conditions, the condensation polymerization results in a high degree of cross-linking between the silane monomers, perhaps resulting in cross-linked spherical polysiloxane particles.

The base used to catalyse this hydrolysis step is not limited but preferred bases are ammonia, lysine, arginine, sodium hydroxide, potassium hydroxide or a mixture thereof. The amount of base added is also not limited, save that the amount should be sufficient to provide the reaction mixture with a basic pH. Preferably the pH of the reaction mixture during step (ii) is at least 8, more preferably at least 8.5, more preferably still at least 9 and most preferably from 9.5 to 12.

The degree of hydrolysis (and therefore condensation) of the silanes at the end of the basic hydrolysis step (ii) should not be complete, otherwise there would be no silane left to hydrolyse during the subsequent acid hydrolysis step (iii). Typically, however a majority of the hydrolysable ligand (R¹) is consumed during the basic hydrolysis step (ii). Preferably at least 50 mol% of the total amount of R¹ ligands in the reaction mixture are liberated from the silanes at the end of step (ii), more preferably at least 70 mol% and most preferably from 80 to 99 mol%. Additionally or alternatively, the duration of the hydrolysis during step (ii) is preferably at least 30 minutes, more preferably at least 1 hour, and most preferably from 1.5 to 3 hours.

Step (iii) of the process comprises continuing the hydrolysis of the reaction mixture under acidic conditions. During this step the unreacted portion of the first and second quaternary silanes remaining from step (ii) undergoes condensation polymerization to form oligomers and polysiloxane. Owing to the acidic conditions, this second condensation polymerization results in a low degree of cross-linking between the silane monomers, perhaps resulting largely in linear oligomers. Without wishing to be bound by theory, the present inventors believe that these linear oligomers strengthen the final coating formed from the cross-linked spherical polysiloxane particles produced in step (ii) without substantially increasing the opacity of the coating.

The acid used to catalyse this hydrolysis step is not limited but preferred acids are HCl, HF, HNO₃, H₂SO₄, CH₃CO₂H, citric acid, formic acid or a mixture thereof. The amount of acid added is also not limited, save that the amount should be sufficient to provide the reaction mixture with an acidic pH. Preferably the pH of the reaction mixture during step (iii) is less than 5, more preferably less than 4, more preferably less than 3 and most preferably from 0.2 to 2.

The duration of the hydrolysis during step (iii) is preferably at least 30 minutes, more preferably at least 1 hour, and most preferably from 1.5 to 3 hours.

In a preferred embodiment at least part of the second quaternary silane is added to the reaction mixture only during step (iii). Without wishing to be bound by theory, the present inventors believe addition of second quaternary silane after step (ii) ensures that at least some of the hydrophobic groups from the second quaternary silane become incorporated in the linear oligomers as well as the cross-linked polysiloxane particles.

The temperature of the reaction mixture during the hydrolysis steps (ii) and (iii) is preferably from 10 to 60 °C, more preferably from 15 to 50 °C and most preferably from 20 to 45 °C.

In certain embodiments the coating composition may be suitable for use directly following step (iii). However in a preferred embodiment the composition is diluted prior to use. In particular it is preferred that the coating composition is aqueous and the process comprises the additional step of diluting the redaction mixture with an aqueous liquid to yield the coating composition comprising at least 50% water by weight of the coating composition. More preferably the composition comprises at least 60% water by weight of the composition, more preferably still at least 70% and most preferably from 75 to 90%.

The composition may be diluted, for example, such that it comprises a total amount of silane of no more than 10% by weight of the composition, more preferably no more than 7%, more preferably still no more than 5%, even more preferably no more than 4%, even more preferably still no more than 3% and most preferably no more than 2%. The minimum amount of total silane (the amount of first hydrolyzed quaternary silane plus the amount of second hydrolyzed quaternary silane) is preferably at least 0.01% by weight of the composition, more preferably at least 0.05%, more preferably still at least 0.1% and most preferably at least 0.2%.

Advantageously, polar organic solvent may be used to improve the compatibility of polysiloxane particles with water. Thus in one embodiment the composition comprises polar organic solvent (especially C₁-C₄ alcohol) and water. More preferably the composition comprises polar organic solvent and water in a weight ratio of solvent:water of from 20:1 to 1:20, even more preferably from 10:1 to 1:15, more preferably still from 1:1 to 1:10 and most preferably from 1:2 to 1:5.

In certain embodiments, and especially where the composition is employed as a hard surface cleaning composition, it is preferably to include a surfactant in the formulation. Therefore preferably the composition comprises surfactant. The surfactant may be anionic, non-ionic, cationic, amphoteric, zwitterionic or a mixture thereof. However we have found that cationic surfactants in particular can be employed in the composition of the invention without interfering with the ability of the composition to form a hydrophobic coating. Thus preferably the surfactant comprises cationic surfactant, more preferably at least 50% by total weight of surfactant in the composition is cationic surfactant, more preferably still at least 75% by weight, most preferably from 80 to 100%.

Preferred cationic surfactants are quaternary ammonium salts. More preferably, the cationic surfactant has the formula N⁺R³R⁴R⁵R⁶ wherein R³, R⁴, R⁵ and R⁶ are independently (C₁ to C₃₀) alkyl or benzyl. Preferably, one, two or three of R³, R⁴, R⁵ and R⁶ are independently (C₄ to C₃₀) alkyl, and the other R³, R⁴, R⁵ and R⁶ group or groups are (C₁-C₆) alkyl or benzyl.

The most preferred cationic surfactant is selected from cetyl-trimethylammonium bromide (CTAB), cetyl-trimethylammonium chloride (CTAC), behenyl-trimethylammonium chloride (BTAC), stearyl trimethyl ammonium chloride (STAC), benzyldimethyltetradecylammonium chloride (BDMTAC) and mixtures thereof.

Anionic surfactant can often disrupt the ability of the composition to form a hydrophobic coating. Thus it is preferred that surfactant (when present) is substantially free from anionic surfactant. More preferably less than 10% by total weight of surfactant in the composition is anionic surfactant, more preferably still less than 5% by weight, most preferably from 0 to 1% of the surfactant in the composition is anionic surfactant.

Typically, the composition comprises surfactant in an amount of from 0.01 to 4% by weight. However, even for cationic surfactant, high levels can, in some instances, interfere with the composition's ability to form hydrophobic coatings. Therefore it is preferred that the composition comprises less than 3% surfactant by weight of the composition, more preferably, less than 2%, even more preferably less than 1% and most preferably from 0.05 to 0.5%.

In some embodiments the composition may be substantially free from surfactant. More preferably such compositions comprise less than 0.01% surfactant by weight of the composition, most preferably from 0 to 0.001%.

The composition of the invention may have any suitable pH. However, the preferred pH is in the range 0.2 to 9.

The composition of the invention is used to prepare a hydrophobic coating.The method for making a hydrophobic coating on a surface preferably comprises (more preferably consists or consists essentially of) the steps of applying the composition to a surface and allowing the composition to dry. The silanes may (further) polymerize during the drying process and undergo a so-called sol-gel transition. Without wishing to be bound by theory, the present inventors believe that polymerization of the silanes in the final coating composition may, in part, contribute to its excellent robustness.

Typically, after drying, the coating will comprise less than 30% solvent (wherein solvent includes total of water and organic solvent) by weight of the coating, more preferably less than 20%, more preferably still less than 10% and most preferably from 0.001 to 5%.

The coating is hydrophobic. More preferably, the coating may display a contact angle for water of at least 100 degrees or even from 105 to 160 degrees. Additionally or alternatively the coating may display a sliding angle for water of less than 40 degrees or even from 0.1 to 30 degrees. In some instances, for example, the coating may be ultrahydrophobic, or even superhydrophobic.

The coating is typically at least translucent and often transparent. For example, the coating may display a transmittance value of at least 80%, more preferably at least 85% and most preferably from 87 to 95%. Additionally or alternatively the coating may have a Haze value of less than 5%, more preferably less than 4%, more preferably still less than 3%, even more preferably less than 2% and most preferably from 0.001 to 1%.

The composition of the present invention is preferably suitable for treating a hard surface, especially to aid cleaning or soil-resistance of the hard surface. "hard surface," for the purposes of the present invention means any surface comprising a hard material such as glass, glazed ceramics, metal, stone, plastics, lacquer, wood, or combination thereof. Typically, the hard surface is in a household including window, kitchen, bathroom, toilet, furniture, floor, or the like.

When treating a hard surface by the composition, any general way for treating a hard surface is acceptable. Typically, the way for treating a hard surface by the composition is spraying the composition onto the hard surface, or wiping the hard surface by wipe impregnated with the composition, or pouring the composition onto the hard surface, or combination thereof. Preferably, the way for treating a hard surface is spraying the composition onto a hard surface, and/or wiping a hard surface by wipe impregnated with the composition. When spraying is employed for treating a hard surface, there is no limitation how the composition is sprayed. Typically, a spraying bottle for hard surface cleaning product is favourable. When wiping is employed for treating a hard surface, wipe including woven or nonwoven cloth, natural or synthetic sponges or spongy sheets, "squeegee" materials, paper towel, or the like is suitable. The wipe may be impregnated dry, or more preferably in wet form.

Whilst not being bound by any particular theory or explanation, we believe that the composition exerts it effect by depositing a mixture of cross-linked polysiloxane particles and linear polysiloxane oligomers onto a hard surface, forming a hydrophobic layer attached to the hard surface. The layer could enhance resistance to deposition of soil and/or stains or at least make such substances easier to remove.

Thus, after treating the surface with the composition, the method for treating a hard surface may optionally further comprises the steps of allowing soil and/or stains to deposit. Thus, the soil or stains will be easily removed when the hard surface is subsequently cleaned according to the method of this invention. Meanwhile, the composition of the invention is also preferably applied to the hard surface during the subsequent cleaning. Optionally, treating of a hard surface with the composition may be followed by a rinsing step, preferably with water.

Therefore a most preferred method for treating a hard surface comprises:
I. forming the hydrophobic coating on the surface;
II. allowing soil and/or stains to deposit on the coating; and then
III. cleaning the surface to remove the soil and/or stains.

The present invention may also deliver other benefits such as long last cleaning, less effort for cleaning, less surface corrosion, less noise during cleaning, and/or scratch resistance. Further aspects of the present invention comprise methods for obtaining one or more these other benefits in a hard surface cleaning operation and/or use the composition in the methods in the manufacture of products for delivering any one more such benefits mentioned in this invention.

The soils and stains of present invention may comprise all kinds of soils and stains generally encountered in the household, either of organic or inorganic origin, whether visible or invisible to the naked eye, including soiling solid debris and/or with bacteria or other pathogens. Specifically the method and compositions according to the invention may be used to treat surface susceptible to fatty or greasy soil and stains.

The composition may be packed in any form, but preferably is packaged as a conventional hard surface treatment or cleaning product. The preferred packaging is a spray applicator. Pump dispersers (whether spray or non-spray pumps) and pouring applications (bottles etc) are also possible. It is also possible to impregnate a wipe with the composition.

The following examples are provided to facilitate an understanding of the present invention. The examples are not provided to limit the scope of the claims.

### EXAMPLES

### Example 1

This example demonstrates the formulation of a hard surface treatment composition according to the invention.

### Reparation of sol concentrate

A mixture of 489.10g ethanol and 35.19g TEOS (tetraethylorthosilicate from Sinopharm Chemical Reagent Co) was stirred for 30 min at room temperature (25 °C). Then 2.377 g of DTS (n-dodecyltrimethoxysilane from Tokyo Chemical Industry Co., Ltd) was added to the mixture with stirring for a further 30 min in order to ensure homogenous dispersion. 1.70 g of an aqueous ammonia solution was then slowly added to the mixture with constant stirring for 30 min. 15.996 g water was then added and stirring continued for 2 hours. 4.68 g of hydrochloric acid was added slowly followed by an additional 1.62 g DTS. The whole mixture was then stirred for a further 2 hours. The final pH of the composition was 2.18.

### Preparation of hard-surface treatment product

190 g of the sol concentrate was diluted with 650 g water. 0.1 g perfume was then added and the composition packaged in spray applicators ready for use. The final composition is given in Table 1.

**TABLE 1**

| **Ingredient** | **CAS No.** | **Addition level (wt%)** | **Active content of ingredient (wt%)** | **Final concentration (wt%)** |
|---|---|---|---|---|
| Tetraethyl orthosilicate | 78-10-4 | 1.448 | 100 | 1:448 |
| Dodecyltrimethoxysilane | 3069-21-4 | 0.158 | 96 | 0.152 |
| Ammonium hydroxide | 1336-21-6 | 0.069 | 25 | 0.017 |
| HCl | 7647-01-0 | 0.193 | 38 | 0.073 |
| Perfume | NA | 0.013 | 100 | 0.013 |
| Ethanol | 64-17-5 | 20.000 | 100 | 20.000 |
| Deminerlized water | 7732-18-5 | 78.119 | 100 | to 100 |

### Reparation of Coatings

Glass slides were chosen as model substrate. Pipette was used to drop the composition on the glass slide in a controlled amount. After the dispersion was dropped on the target surface, the tip of the pipette was used to spread the composition on the surface to ensure uniform coating. After application of the composition on the substrate, the solvent was allowed to evaporate (typical evaporation time was 10-30 min) at room temperature (25 °C).

### Characterisation of Coatings

Drop shape analysis system 100 (DSA 100, Krüss) was used to measure contact angle and sliding angle. DSA 100 with the tilting table maximum utilization of field of view up to 90 degrees was used for sliding angle test using deionised water drops of around 10•L applied to five different points of each film and the sliding angle averaged over all 5 drops.

### Results

The coating prepaced from the composition was found to be hydrophobic both in terms of contact angle (108.7 ± 0.6 degrees) and sliding angle (30 ± 3 degrees). The coating was also found to be completely transparent (Haze of less than 1%).

### Example 2

This example demonstrates the formulation of compositions according to the invention with varying amounts of silane.

### Preparation of Compositions

The compositions were prepared in a similar manner to the sol concentrate described in Example 1. For all samples the pH after addition of ammonium hydroxide was in the range 10.7-10.9 and after addition of hydrochloric acid was in the range 0.5-0.9. Table 2 summarises the samples tested.

**TABLE 2**

| **Sample** | **Ingredient (wt%)** | | | | | |
|---|---|---|---|---|---|---|
| | **EtOH** | **TEOS** | **DTS** | **NH₃H₂O*** | **H₂O** | **HCl**** |
| 1 | to 100 | 1.50 | 0.15 | 0.30 | 0.65 | 0.80 |
| 2 | to 100 | 3.00 | 0.30 | 0.30 | 1.30 | 0.80 |
| 3 | to 100 | 4.50 | 0.45 | 0.30 | 1.90 | 0.80 |
| 4 | to 100 | 4.50 | 0.45 | 0.30 | 2.60 | 0.80 |
| 5 | to 100 | 6.00 | 0.60 | 0.30 | 1.90 | 0.80 |
| 6 | to 100 | 6.00 | 0.60 | 0.30 | 2.60 | 0.80 |
| 7 | to 100 | 7.50 | 0.75 | 0.30 | 3.30 | 0.80 |
| 8 | to 100 | 9.00 | 0.90 | 0.30 | 3.90 | 0.80 |
| 9 | to 100 | 10.50 | 1.05 | 0.30 | 4.60 | 0.80 |
| 10 | to 100 | 11.50 | 1.15 | 0.30 | 5.00 | 0.80 |

| | | | | | | |
|---|---|---|---|---|---|---|
| *Amount is amount of 25 wt% aqueous solution. **Amount is amount of 38 wt% aqueous solution. | | | | | | |

### Reparation and Characterisation of Coatings

Contact angle and sliding angle were determined as in Example 1.

### Results

All compositions formed transparent coatings. The values of contact angle and sliding angle, along with the 95% confidence interval are given in Table 3.

**TABLE 3**

| **Sample** | **Contact Angle (Degrees)** | **Sliding Angle (Degrees)** |
|---|---|---|
| 1 | 109.3 ± 0.6 | 43 ± 2 |
| 2 | 109.3 ± 0.5 | 37 ± 8 |
| 3 | 110 ± 1 | 31 ± 7 |
| 4 | 112.0 ± 0.1 | 26 ± 2 |
| 5 | 111.8 ± 0.6 | 27 ± 2 |
| 6 | 110.3 ± 0.7 | 22 ± 4 |
| 7 | 109 ± 1 | 22 ± 4 |
| 8 | 109.3 ± 0.5 | 25 ± 6 |
| 9 | 110 ± 3 | 28 ± 3 |
| 10 | 109 ± 1 | 31 ± 5 |

All samples gave hydrophobic coatings, whether judged by contact angle or sliding angle. However, the sample with the lowest total amount of silane (Sample 1) was only marginally hydrophobic in terms of sliding angle.

### Example 3

This example demonstrates the formulation of compositions according to the invention with varying amounts of hydrophobic silane.

### Preparation of Compositions

The compositions were prepared in an identical manner as described in Example 2. Table 4 summarises the samples tested.

**TABLE 4**

| **Sample** | **Ingredient (wt%)** | | | | | |
|---|---|---|---|---|---|---|
| | **EtOH** | **TEOS** | **DTS** | **NH₃H₂O*** | **H₂O** | **HCl**** |
| 11 | to 100 | 6.00 | 0.6 | 0.30 | 2.60 | 0.80 |
| 12 | to 100 | 6.00 | 1.2 | 0.30 | 2.60 | 0.80 |
| 13 | to 100 | 6.00 | 1.8 | 0.30 | 2.60 | 0.80 |
| 14 | to 100 | 6.00 | 2.4 | 0.30 | 2.60 | 0.80 |
| 15 | to 100 | 6.00 | 3.0 | 0.30 | 2.60 | 0.80 |
| 16 | to 100 | 6.00 | 6.0 | 0.30 | 2.60 | 0.80 |

| | | | | | | |
|---|---|---|---|---|---|---|
| *Amount is amount of 25 wt% aqueous solution. **Amount is amount of 38 wt% aqueous solution. | | | | | | |

### Reparation and Characterisation of Coatings

Contact angle and sliding angle were determined as in Example 1.

### Results

All compositions formed transparent coatings except for samples 15 and 16 where some greasy dots were observed. The values of contact angle and sliding angle, along with the 95% confidence interval are given in Table 5.

**TABLE 5**

| **Sample** | **Contact Angle (Degrees)** | **Sliding Angle (Degrees)** |
|---|---|---|
| 11 | 110.3 ± 0.7 | 22 ± 4 |
| 12 | 114 ± 3 | 40.3 ± 0.6 |
| 13 | 113.1 ± 0.4 | 32 ± 9 |
| 14 | 110.1 ± 0.7 | 57 ± 16 |
| 15 | 111 ± 2 | 44 ± 5 |
| 16 | 110 ± 2 | 53 ± 3 |

All samples gave hydrophobic coatings if judged by contact angle alone. However, only samples 11, 12 and 13 gave clearly hydrophobic coatings if judged by sliding angle. Surprisingly the best (lowest) sliding angle was demonstrated by the coating having the lowest proportion of hydrophobic silane (Sample 11).

### Example 4

This example demonstrates the formulation of compositions according to the invention with various amounts of water present during the hydrolysis steps.

### Preparation of Compositions

The compositions were prepared in an identical manner as described in Example 2. Table 6 summarises the samples tested.

**TABLE 6**

| **Sample** | **Ingredient (wt%)** | | | | | |
|---|---|---|---|---|---|---|
| | **EtOH** | **TEOS** | **DTS** | **NH₃H₂O*** | **H₂O** | **HCl**** |
| 17 | to 100 | 6.00 | 0.60 | 0.30 | 2.60 | 0.80 |
| 18 | to 100 | 6.00 | 0.60 | 0.30 | 5.2 | 0.80 |
| 19 | to 100 | 6.00 | 0.60 | 0.30 | 10.4 | 0.80 |
| 20 | to 100 | 6.00 | 0.60 | 0.30 | 20.8 | 0.80 |
| 21 | to 100 | 6.00 | 0.60 | 0.30 | 41.6 | 0.80 |

| | | | | | | |
|---|---|---|---|---|---|---|
| *Amount is amount of 25 wt% aqueous solution. **Amount is amount of 38 wt% aqueous solution. | | | | | | |

### Preparation and Characterisation of Coatings

Contact angle and sliding angle were determined as in Example 1.

### Results

All compositions formed transparent coatings except for samples 20 and 21 which were opaque. The values of contact angle and sliding angle, along with the 95% confidence internal are given in Table 7.

**TABLE 7**

| **Sample** | **Contact Angle (Degrees)** | **Sliding Angle (Degrees)** |
|---|---|---|
| 17 | 110.3 ± 0.7 | 22 ± 4 |
| 18 | 114 ± 2 | 36 ± 5 |
| 19 | 114 ± 4 | 34 ± 2 |
| 20 | 110 ± 6 | 29.3 ± 0.6 |
| 21 | 115 ± 2 | 50 ± 10 |

All samples gave hydrophobic coatings if judged by contact angle alone. However the sample with the highest water content (Samples 21) had a high sliding angle.

The fact that the coatings made from Samples 20 and 21 were not transparent may result from the large amount of water present during the first hydrolysis step. This could have resulted in excessive condensation polymerization of silanes and formation of large aggregates/precipitates of the polysiloxane.

### Example 5

This example demonstrates the formulation of compositions according to the invention with various amounts of cationic surfactant.

### Reparation of Compositions

The compositions were prepared in an identical manner as described in Example 2 except following formation of the sol concentrates, cationic surfactant (BTAC) was added in various amounts. Table 8 summaries the samples tested.

**TABLE 8**

| **Sample** | **Ingredient (wt%)** | | | | | | |
|---|---|---|---|---|---|---|---|
| | **EtOH** | **TEOS** | **DTS** | **NTH₃H₂O*** | **H₂O** | **HCl**** | **BTAC** |
| 22 | to 100 | 6.00 | 0.60 | 0.30 | 2.60 | 0.80 | 0.1 |
| 23 | to 100 | 6.00 | 0.60 | 0.30 | 2.60 | 0.80 | 0.2 |
| 24 | to 100 | 6.00 | 0.60 | 0.30 | 2.60 | 0.80 | 0.3 |
| 25 | to 100 | 6.00 | 0.60 | 0.30 | 2.60 | 0.80 | 0.4 |

| | | | | | | | |
|---|---|---|---|---|---|---|---|
| *Amount is amount of 25 wt% aqueous solution. **Amount is amount of 38 wt% aqueous solution. | | | | | | | |

### Preparation and Characterisation of Coatings

Contact angle and sliding angle were determined as in Example 1.

### Results

All compositions formed transparent coatings. The values of contact angle and sliding angle, along with the 95% confidence interval are given in Table 9.

**TABLE 9**

| **Sample** | **Contact Angle (Degrees)** | **Sliding Angle (Degrees)** |
|---|---|---|
| 22 | 106 ± 3 | 37 ± 3.00 |
| 23 | 106 ± 2 | 50 ± 4 |
| 24 | 104 ± 4 | 55 ± 4 |
| 25 | 102 ± 1 | 58 ± 9 |

All samples gave hydrophobic coatings if judged by contact angle alone. However only the sample with the lowest surfactant content (Sample 22) gave a hydrophobic coating if judged by sliding angle.

### Example 6

This example shows the effect of the older of the hydrolysis steps on composition and film properties.

### Preparation of Compositions

The compositions were prepared in an identical manner as described in Example 2 except for two samples (Samples A and B) the acid hydrolysis step (with HCl) was conducted before the basic hydrolysis step (with Ammonia). Table 10 summarises the samples tested.

**TABLE 10**

| **Sample** | **Ingredient (wt%)** | | | | | |
|---|---|---|---|---|---|---|
| | **EtOH** | **TEOS** | **DTS** | **NH₃H₂O*** | **H₂O** | **HCl**** |
| 26 | to 100 | 7.50 | 0.75 | 0.30 | 2.60 | 0.80 |
| A | to 100 | 7.61 | 0.75 | 0.44 | 2.60 | 0.84 |
| B | to 100 | 9.03 | 0.83 | 0.39 | 3.40 | 0.84 |

| | | | | | | |
|---|---|---|---|---|---|---|
| *Amount is amount of 25 wt% aqueous solution. **mount is amount of 38 wt% aqueous solution. | | | | | | |

### Preparation and Characterisation of Coatings

Contact angle and sliding angle were determined as in Example 1.

### Results

Both samples A and B were cloudy liquids with visible sediment. The values of contact angle and sliding angle, along with the 95% confidence interval are given in Table 11. Owing to the sedimentation, for Samples A and B the values given are for the coating formed from the supernatant.

**TABLE 11**

| **Sample** | **Contact Angle (Degrees)** | **Sliding Angle (Degrees)** |
|---|---|---|
| 26 | 110.3 ± 0.7 | 22 ± 4 |
| A | 111 ± 1 | 55 ± 17 |
| B | 108 ± 2 | 27 ± 4 |

All samples gave hydrophobic coatings when judged by contact angle. When judged by sliding angle, Sample A did not give a clearly hydrophobic coating when judged by sliding angle.

Thus samples made by conducting first acidic and then base hydrolysis (Samples A and B) do not form homogenous compositions even though supernatents removed from these samples can be used to make hydrophobic coatings.

### Example 7

This example shows the effect of removing hydrophobic silane from the composition.

### Reparation of Compositions

The compositions were prepared in an identical manner as described in Example 2 except that all of the hydrophobic silane (either DTS or HTS = hexyltrimethoxysilane from Tokyo Chemical Industry Co., Ltd.) was added at the start of the reaction. One sample (Sample C) was made without adding any hydrophobic silane. Table 12 summarises the samples tested.

**TABLE 12**

| **Sample** | **Ingredient (wt%)** | | | | | | |
|---|---|---|---|---|---|---|---|
| | **EtOH** | **TEOS** | **DTS** | **HTS** | **NH₃H₂O*** | **H₂O** | **HCl**** |
| 27 | to 100 | 5.74 | --- | 0.78 | 0.32 | 3.07 | 0.70 |
| 28 | to 100 | 6.59 | 0.76 | --- | 0.31 | 2.86 | 0.80 |
| C | to 100 | 9.00 | --- | --- | 0.20 | 2.70 | 0.90 |

| | | | | | | | |
|---|---|---|---|---|---|---|---|
| *Amount is amount of 25 wt% aqueous solution. **Amount is amount of 38 wt% aqueous solution. | | | | | | | |

### Reparation and Characterisation of Coating

Contact angle and sliding angle were determined as in Example 1.

An abrasion test was conducted as follows: A glass slide coated with the sample was placed on a modified automatic film applicator (Model 1133-N Sheen). The weight of the applicator was attached with adhesive to the upper suface of a Ballerina cloth (dry or wet with water of 1.5 times of the cloth weight) and was pushed across the substrate by a pushing bar. The weight was 400 g which was equivalent to applying a pressure of 6.4 kPa to the coating. Both the contact angle and sliding angle before and after the abrasion test were measured to evaluate the film's durability.

### Results

The values of contact angle and sliding angle both before and after abrasion are given in Table 13.

**TABLE 13**

| **Sample** | **Contact Angle (Degrees)** | **Sliding Angle** (**Degrees**) |
|---|---|---|
| 27 | 105 ± 5 | 22 ± 2 |
| 27 post-abrasion | 100 ± 7 | 27 ± 1 |
| 28 | 110 ± 1 | 20 ± 1 |
| 28 post-abrasion | 107.9 ± 0.6 | 30 ± 2 |
| C | 81 ± 1 | 33 ± 3 |
| C post-abrasion | 80 ± 3 | 46 ± 5 |

Only the samples made from reaction mixture comprising hydrophobic silane (Samples 27 and 28) gave hydrophobic coatings as judged by contact angle. All samples gave hydrophobic coatings as judged by sliding angle although the most hydrophobic were those made from reaction mixture which comprised hydrophobic silane (Samples 27 and 28). The coating made from the completely hydrolysable silane (Sample C) was less robust than the coatings made from reaction mixture which comprised hydrophobic silane (Samples 27 and 28) as shown by the loss of hydrophobicity on abrasion.

### Example 8

This example demonstrates coatings made from silanes having various types of R² group.

### Preparation of Compositions

The compositions were prepared in an identical manner as described in Example 2 except that all of the type of hydrophobic silane was varied. Table 14 summarises the samples tested.

**TABLE 14**

| **Sample** | **R²** | **Ingredient (wt%)** | | | | | |
|---|---|---|---|---|---|---|---|
| | | **EtOH** | **TEOS** | **Hydrophobic Silane** | **NH₃H₂O*** | **H₂O** | **HCl**** |
| D | C₁ (Methyl) | to 100 | 7.80 | 0.73⁽¹⁾ | 0.41 | 2.90 | 0.79 |
| E | C₁ (Methyl) | to 100 | 7.55 | 0.77⁽²⁾ | 0.32 | 2.56 | 0.78 |
| 29 | C₃ (Propyl) | to 100 | 7.55 | 0.72⁽³⁾ | 0.38 | 2.55 | 0.79 |
| 30 | C₁₂ (n-Dodecyl) | to 100 | 8.00 | 0.75⁽⁴⁾ | 0.33 | 3.34 | 0.78 |
| 31 | C₁₈ (Octadecyl) | to 100 | 7.50 | 0.86⁽⁵⁾ | 0.32 | 2.57 | 0.78 |

| | | | | | | | |
|---|---|---|---|---|---|---|---|
| *Amount is amount of 25 wt% aqueous solution. **Amount is amount of 38 wt% aqueous solution. (1) Triethoxymethylsilane from Tokyo Chemical Industry Co., Ltd. (2) Methyltriethoxysilane from J&K Chemical. (3) Trimethoxy(propyl)silane from Tokyo Chemical Industry Co., Ltd. (4) n-Dodecylt<-ethoxysilane from Tokyo Chemical Industry Co., Ltd. (5) Octadecyltriethoxysilane from Tokyo Chemical Industry Co., Ltd. | | | | | | | |

### Preparation and Characterisation of Coatings

Contact angle and sliding angle were determined as in Example 1.

### Results

All compositions formed transparent coatings. The values of contact angle and sliding angle, along with the 95% confidence interval are given in Table 15.

**TABLE 15**

| **Sample** | **Contact Angle (Degrees)** | **Sliding Angle (Degrees)** |
|---|---|---|
| D | 43 ± 3 | > 90 |
| E | 42 ± 4 | > 90 |
| 29 | 76 ± 1 | 33 ± 2 |
| 30 | 112 ± 2 | 31 ± 2 |
| 31 | 105 ± 2 | 62 ± 17 |

All samples with R² > 1 (Samples 29-31) produced coatings which were hydrophobic when judged by contact angle and/or sliding angle.

## Claims

1. A process for manufacturing a coating composition, wherein the process comprises the steps of:
(i) forming a reaction mixture comprising water, first quaternary silane and second quaternary silane, wherein the first quaternary silane has formula (I),
Si(R¹)₄ (I)
wherein each R¹ is independently selected from alkoxy and halogen; and the second quaternary silane has formula (II),
(R¹)₄₋ₘSi(R²)ₘ (II)
wherein each R¹ is independently selected from alkoxy and halogen;
R² comprises at least 2 carbon atoms and is selected from alkyl, alkenyl, fluoroalkyl, fluoroalkenyl, aryl, fluoroaryl and combinations thereof; and
m is an integer from 1 to 3, preferably 1 or 2;
(ii) hydrolyzing the reaction mixture under basic conditions; and then
(iii) continuing the hydrolysis under acidic conditions.

2. The process as claimed in claim 1, wherein the coating composition is aqueous and the process comprises the additional step of diluting the reaction mixture with an aqueous liquid to yield the coating composition comprising at least 50% water by weight of the coating composition

3. The process as claimed in claim 1 or claim 2, wherein the first quaternary silane comprises tetraethoxysilane, tetramethoxysilane, tetrapropoxysilane, tetrabutoxysilane, tetrabromosilane, tetrachlorosilane, or a mixture thereof.

4. The process as claimed in any one of the preceding claims, wherein R² comprises at least 3 carbon atoms, preferably R² is C₄-C₃₀.

5. The process as claimed in any one of the preceding claims, wherein m = 1.

6. The process as claimed in any one of the preceding claims, wherein the weight ratio of the first quaternary silane to the second quaternary silane in the redaction mixture is at least 1:1, preferably in the range of from 2:1 to 50:1.

7. A coating composition obtainable by the process as claimed in any one of the preceding claims, wherein the composition is capable of yielding a hydrophobic coating.

8. A method for forming a hydrophobic coating on a surface, the method comprising applying the composition of claim 7 to the surface and drying the composition to yield the hydrophobic coating.

9. A method for treating a hard surface comprising:
I. forming a hydrophobic coating on the surface by the method of claim 8;
II. allowing soil and/or stains to deposit on the coating; and then
III. cleaning the surface to remove the soil and/or stains.

10. The method as claimed in claim 9, wherein step III comprises applying the composition of claim 7 to the surface.

11. A hydrophobic coating obtainable by the method of claim 8, wherein the coating displays a contact angle for water of at least 100 degrees, a sliding angle for water of less than 45 degrees, or both, as determined in accordance with the methods of measurement outlined in the description.

## Patentansprüche

1. Verfahren zur Herstellung einer Beschichtungsmasse, wobei das Verfahren die Schritte umfasst:
(i) Bilden einer Reaktionsmischung, umfassend Wasser, ein erstes quaternäres Silan und ein zweites quaternäres Silan, wobei das erste quaternäre Silan die Formel (I)
Si(R¹)₄ (I)
hat,
worin jedes R¹, unabhängig voneinander, unter Alkoxy und Halogen ausgewählt ist, und
das zweite quaternäre Silan die Formel (II)
(R¹)₄₋ₘSi(R²)ₘ (II)
hat,
worin jedes R¹, unabhängig voneinander, unter Alkoxy und Halogen ausgewählt ist;
R² mindestens 2 Kohlenstoffatome umfasst und unter Alkyl, Alkenyl, Fluoralkyl, Fluoralkenyl, Aryl, Fluoraryl und Kombinationen davon ausgewählt ist und
m eine ganze Zahl von 1 bis 3, vorzugsweise 1 oder 2 ist,
(ii) Hydrolysieren der Reaktionsmischung unter basischen Bedingungen und dann
(iii) Fortführen der Hydrolyse unter sauren Bedingungen.

2. Verfahren gemäß Anspruch 1, wobei die Beschichtungsmasse wässrig ist und das Verfahren den zusätzlichen Schritt des Verdünnens der Reaktionsmischung mit einer wässrigen Flüssigkeit umfasst, um die Beschichtungsmasse zu ergeben, die mindestens 50 Gew.-% Wasser der Beschichtungsmasse umfasst.

3. Verfahren, wie in Anspruch 1 oder 2 beansprucht, wobei das erste quaternäre Silan Tetraethoxylsilan, Tetramethoxysilan, Tetrapropoxysilan, Tetrabutoxysilan, Tetrabromsilan, Tetrachlorsilan oder eine Mischung davon umfasst.

4. Verfahren, wie in irgendeinem der vorhergehenden Ansprüche beansprucht, wobei R² mindestens 3 Kohlenstoffatome umfasst, vorzugsweise R² C₄-C₃₀ ist.

5. Verfahren, wie in irgendeinem der vorhergehenden Ansprüche beansprucht, wobei m = 1 ist.

6. Verfahren, wie in irgendeinem der vorhergehenden Ansprüche beansprucht, wobei das Gewichtsverhältnis des ersten quaternären Silans zu dem zweiten quaternären Silan in der Reaktionsmischung mindestens 1:1 ist, vorzugsweise in dem Bereich von 2:1 bis 50:1.

7. Beschichtungszusammensetzung, erhältlich nach dem Verfahren, wie in irgendeinem der vorhergehenden Ansprüche beansprucht, wobei die Zusammensetzung im Stande ist, eine hydrophobe Beschichtung zu ergeben.

8. Verfahren zur Ausbildung einer hydrophoben Beschichtung auf einer Oberfläche, wobei das Verfahren das Aufbringen der Zusammensetzung gemäß Anspruch 7 auf die Oberfläche und Trocknen der Zusammensetzung umfasst, um eine hydrophobe Beschichtung zu ergeben.

9. Verfahren zur Behandlung einer harten Oberfläche, umfassend:
I. Ausbilden einer hydrophoben Beschichtung auf der Oberfläche gemäß dem Verfahren des Anspruchs 8,
II. Absetzenlassen von Schmutz und/oder Flecken auf der Beschichtung und dann
III. Reinigen der Oberfläche, um den Schmutz und/oder die Flecken zu entfernen.

10. Verfahren, wie im Anspruch 9 beansprucht, wobei der Schritt III das Aufbringen der Zusammensetzung des Anspruchs 7 auf die Oberfläche umfasst.

11. Hydrophobe Beschichtung, erhältlich durch das Verfahren gemäß Anspruch 8, wobei die Beschichtung einen Kontaktwinkel für Wasser von mindestens 100 Grad, einen Abrollwinkel für Wasser von weniger als 45 Grad, oder beide, aufweist, wie mit der Messmethode, in der Beschreibung dargestellt, bestimmt.

## Revendications

1. Procédé de fabrication d'une composition de revêtement, dans lequel le procédé comprend les étapes consistant :
(i) à former un mélange réactionnel comprenant de l'eau, un premier silane quaternaire et un second silane quaternaire, où le premier silane quaternaire présente la formule (I),
Si(R¹)₄ (I)
où chaque R¹ est indépendamment choisi parmi un groupe alcoxy et un halogène ; et
le second silane quaternaire présente la formule (II),
(R¹)₄₋ₘSi(R²)ₘ (II)
où chaque R¹ est indépendamment choisi parmi un groupe alcoxy et un halogène ;
R² comprend au moins 2 atomes de carbone et est choisi parmi un groupe alkyle, alcényle, fluoroalkyle, fluoroalcényle, aryle, fluoroaryle et des combinaisons de ceux-ci ; et
m est un nombre entier de 1 à 3, de préférence de 1 ou 2 ;
(ii) à hydrolyser le mélange réactionnel dans des conditions basiques ; et puis
(iii) à continuer l'hydrolyse dans des conditions acides.

2. Procédé selon la revendication 1, dans lequel la composition de revêtement est aqueuse et le procédé comprend l'étape supplémentaire consistant à diluer le mélange réactionnel avec un liquide aqueux pour produire la composition de revêtement comprenant au moins 50 % d'eau en masse de la composition de revêtement.

3. Procédé selon la revendication 1 ou la revendication 2, dans lequel le premier silane quaternaire comprend le tétraéthoxysilane, tétraméthoxysilane, tétrapropoxysilane, tétrabutoxysilane, tétrabromosilane, tétrachlorosilane, ou un mélange de ceux-ci.

4. Procédé selon l'une quelconque des revendications précédentes, dans lequel R² comprend au moins 3 atomes de carbone, de préférence R² est en C₄-C₃₀.

5. Procédé selon l'une quelconque des revendications précédentes, dans lequel m = 1.

6. Procédé selon l'une quelconque des revendications précédentes, dans lequel le rapport massique du premier silane quaternaire au second silane quaternaire dans le mélange réactionnel est d'au moins 1:1, de préférence dans l'intervalle de 2:1 à 50:1.

7. Composition de revêtement pouvant être obtenue par le procédé selon l'une quelconque des revendications précédentes, dans laquelle la composition est capable de produire un revêtement hydrophobe.

8. Procédé de formation d'un revêtement hydrophobe sur une surface, le procédé consistant à appliquer la composition selon la revendication 7 sur la surface et à sécher la composition pour produire le revêtement hydrophobe.

9. Procédé de traitement d'une surface dure consistant :
I. à former un revêtement hydrophobe sur la surface par le procédé selon la revendication 8 ;
II. à laisser de la saleté et/ou des taches se déposer sur le revêtement ; et puis
III. à nettoyer la surface pour éliminer la saleté et/ou les taches.

10. Procédé selon la revendication 9, dans lequel l'étape III consiste à appliquer la composition de la revendication 7 sur la surface.

11. Revêtement hydrophobe pouvant être obtenu par le procédé selon la revendication 8, dans lequel le revêtement affiche un angle de contact pour l'eau d'au moins 100 degrés, un angle de glissement pour l'eau inférieur à 45 degrés, ou les deux, comme déterminé selon les procédés de mesure indiqués dans la description.
